# EUROPEAN PATENT APPLICATION

(11) **EP 4 385 594 A1**
(43) Date of publication of application: **19.06.2024**
(21) Application number: 22895408.7
(22) Date of filing: 28.10.2022
(51) Int. Cl.: A63F 13/85, G06T 19/00, H04L 67/131, G06F 3/04842

(54) **CONTROL SYSTEM, INFORMATION SYSTEM, METHOD FOR OPERATING CONTROL SYSTEM, AND PROGRAM**

(30) Priority: 19.11.2021 JP 2021188755
(71) Applicant: Konami Digital Entertainment Co., Ltd., Tokyo 1040061 (JP)
(72) Inventor: HAMADA, Naoki, Tokyo 104-0061 (JP)
(74) Representative: Kehl, Ascherl, Liebhoff & Ettmayr Patentanwälte Partnerschaft mbB
(86) International application number: PCT/JP2022/040351
(87) International publication number: WO 2023/090125

(57) **Abstract**

A control system includes: a first information acquirer configured to acquire first information from a first system in a state in which a first condition is satisfied in use of a first information service by a user, the first system being configured to provide the first information service; a second information acquirer configured to acquire second information from a second system in a state in which a second condition is satisfied in use of a second information service by the user, the second system being configured to provide the second information service differing from the first information service; and an avatar processor configured to apply one or more objects among a plurality of objects to an avatar representing the user in an interactive service, the plurality of objects including a first object corresponding to the first information and a second object corresponding to the second information.

## Description

### TECHNICAL FIELD

This disclosure relates to a technique for using an avatar as a representation of a user.

### BACKGROUND ART

For example, in an interactive service, such as a social networking service (SNS), an avatar representing each user of a plurality of users is used. For example, Patent Document 1 discloses a technique for detecting movement of a user to generate an avatar having an appearance dependent on a result of the detection.

### Related Art Document

### Patent Document

Patent Document 1: Japanese Patent No. 6102939

### SUMMARY OF THE INVENTION

### Problem to be Solved by the Invention

Due to development of information communication techniques in recent years, a variety of information services such as an SNS, a game service, etc., is provided to a user. In the technique disclosed by Patent Document 1, although a result of detection of actual movement of a user is reflected in an avatar, a history of use of different diverse information services by the user is not reflected in the avatar. In view of the circumstances described above, an object of an aspect of this disclosure is to reflect a history of states of use of different diverse information services by a user in an appearance of an avatar of the user.

### Means for Solving Problem

To solve the above problem, a control system according to one aspect of this disclosure includes: a first information acquirer configured to acquire first information from a first system in a state in which a first condition is satisfied in use of a first information service by a user, the first system being configured to provide the first information service; a second information acquirer configured to acquire second information from a second system in a state in which a second condition is satisfied in use of a second information service by the user, the second system being configured to provide the second information service, the second information service being different from the first information service; and an avatar processor configured to apply one or more objects among a plurality of objects to an avatar representing the user in an interactive service, the plurality of objects including a first object corresponding to the first information and a second object corresponding to the second information.

An information system according to another aspect of this disclosure includes: a first system configured to provide a first information service; a second system configured to provide a second information service that differs from the first information service; and a control system configured to provide an interactive service, in which: the first system is configured to transmit first information to the control system in a state in which a first condition is satisfied in use of the first information service by a user, the second system is configured to transmit second information to the control system in a state in which a second condition is satisfied in use of the second information service by the user, and the control system comprises: a first information acquirer configured to acquire the first information from the first system; a second information acquirer configured to acquire the second information from the second system; and an avatar processor configured to apply one or more objects among a plurality of objects to an avatar representing the user in the interactive service, the plurality of objects including a first object corresponding to the first information and a second object corresponding to the second information.

A method for operating a control system according to yet another aspect of this disclosure includes: acquiring first information from a first system in a state in which a first condition is satisfied in use of a first information service by a user, the first system being configured to provide the first information service; acquiring second information from a second system in a state in which a second condition is satisfied in use of a second information service by the user, the second system being configured to provide the second information service, the second information service being different from the first information service; and applying one or more objects among a plurality of objects to an avatar representing the user in an interactive service, the plurality of objects including a first object corresponding to the first information and a second object corresponding to the second information.

A program according to yet another aspect of this disclosure causes a computer system to function as: a first information acquirer configured to acquire first information from a first system in a state in which a first condition is satisfied in use of a first information service by a user, the first system being configured to provide the first information service; a second information acquirer configured to acquire second information from a second system in a state in which a second condition is satisfied in use of a second information service by the user, the second system being configured to provide the second information service, the second information service being different from the first information service; and an avatar processor configured to apply one or more objects among a plurality of objects to an avatar representing the user in an interactive service, the plurality of objects including a first object corresponding to the first information and a second object corresponding to the second information.

### BRIEF DESCRIPTION OF THE DRAWINGS

Fig. 1 is a block diagram showing a configuration of an information system according to a first embodiment.
Fig. 2 is a block diagram showing a configuration of a terminal apparatus.
Fig. 3 is a schematic diagram showing an interaction screen for an interactive service (profile service).
Fig. 4 is a schematic diagram showing an interaction screen for an interactive service (chat service).
Fig. 5 is a schematic diagram showing an interaction screen for an interactive service (virtual space service).
Fig. 6 is a schematic diagram showing setting screens.
Fig. 7 is a block diagram showing a configuration of a game server.
Fig. 8 is a block diagram showing a functional configuration of the information system.
Fig. 9 is a block diagram showing a configuration of a control system.
Fig. 10 is a flowchart showing a registration processing procedure.
Fig. 11 is a flowchart showing an operation when a user starts a game.
Fig. 12 is a flowchart showing an operation of setting of an avatar.
Fig. 13 is a flowchart showing an operation for the interactive service.
Fig. 14 is an explanatory diagram showing an operation of the information system.
Fig. 15 is an explanatory diagram showing an operation of the information system according to a second embodiment.
Fig. 16 is an explanatory diagram showing an operation of the information system according to a third embodiment.

### MODES FOR CARRYING OUT THE INVENTION

Embodiments according to this disclosure will be described with reference to the drawings. The embodiments described below include a variety of technical limitations. The scope of this disclosure is not limited to the embodiments described below.

### First Embodiment

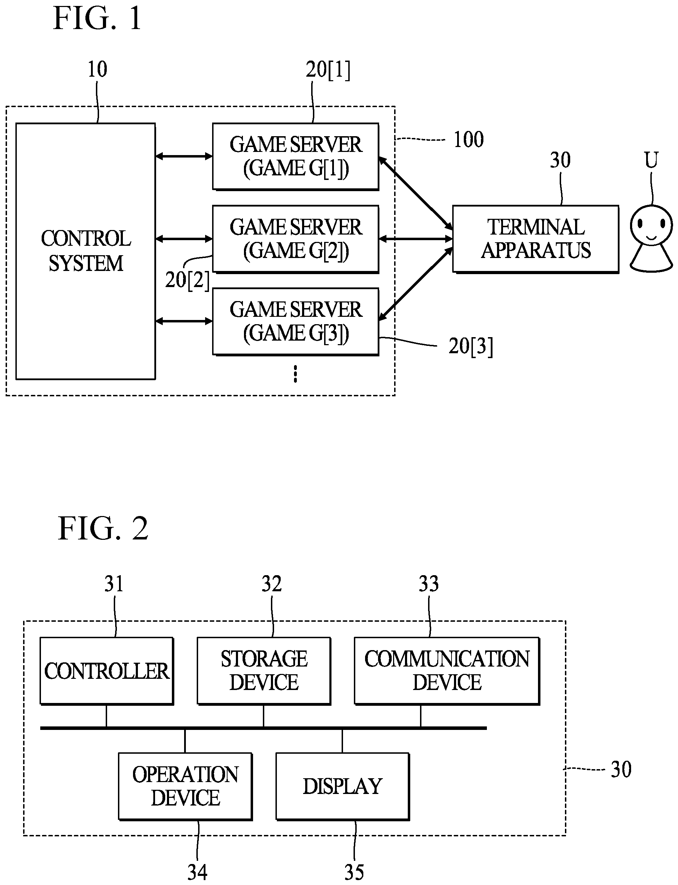

Fig. 1 is a block diagram showing a configuration of an information system 100 according to a first embodiment. The information system 100 is a computer system configured to provide a variety of types of services to each of a plurality of terminal apparatuses 30, and a communication network (not shown) such as the Internet is used in each of the variety of types of services. A terminal apparatus 30 that is each of the plurality of terminal apparatuses 30 is, for example, a portable information apparatus such as a smartphone, a tablet terminal, etc., or a portable or stationary information apparatus such as a personal computer, etc. As the terminal apparatus 30, a portable or stationary dedicated game machine dedicated to a game may be used, for example. In Fig. 1, only one terminal apparatus 30 of the plurality of terminal apparatuses 30 is shown for convenience.

Fig. 2 is a block diagram showing a configuration of the terminal apparatus 30. As shown in Fig. 2, the terminal apparatus 30 includes a controller 31, a storage device 32, a communication device 33, an operation device 34, and a display 35. The terminal apparatus 30 may be constituted of a single integrated device, or alternatively may be constituted of a plurality of separate devices.

The controller 31 comprises one or more processors configured to control components of the terminal apparatus 30. Specifically, the controller 31 may be constituted of one or more types of processors such as a central processor (CPU), a graphics processor (GPU), a digital signal processor (DSP), a field programmable gate array (FPGA), an application specific integrated circuit (ASIC), etc. The communication device 33 communicates with the information system 100 via the communication network.

The storage device 32 comprises one or more memories configured to store a program that is to be executed by the controller 31 and a variety of types of data that is to be used by the controller 31. As the storage device 32, a known recording medium such as a semiconductor recording medium, a magnetic recording medium, etc., or a combination of different types of recording media may be used, for example. Alternatively, as the storage device 32, a portable recording medium that is detachable from the terminal apparatus 30 or a recording medium (for example, a cloud storage server) that is accessible by the controller 31 via the communication network may be used, for example.

The operation device 34 is an input device configured to receive operations made by a user U. As the operation device 34, an element operable by the user U or a touch panel for detecting contact made by the user U may be used, for example. The display 35 displays a variety of types of images under control of the controller 31. As the display 35, a display such as a liquid crystal display panel, an organic EL panel, etc., is used, for example.

As shown in Fig. 1, the information system 100 includes a control system 10 and a plurality of game servers 20[n], where n is a natural number. The control system 10 communicates with each of the plurality of game servers 20[n] and with each of the plurality of terminal apparatuses 30 via the communication network. A game server 20[n] that is each of the plurality of game servers 20[n] communicates with the control system 10 and with each of the plurality of terminal apparatuses 30 via the communication network. The game server 20[n] is a computer system configured to cause the user U of the terminal apparatus 30 to play a game G[n]. The game G[n] is a freely selected type of computer game.

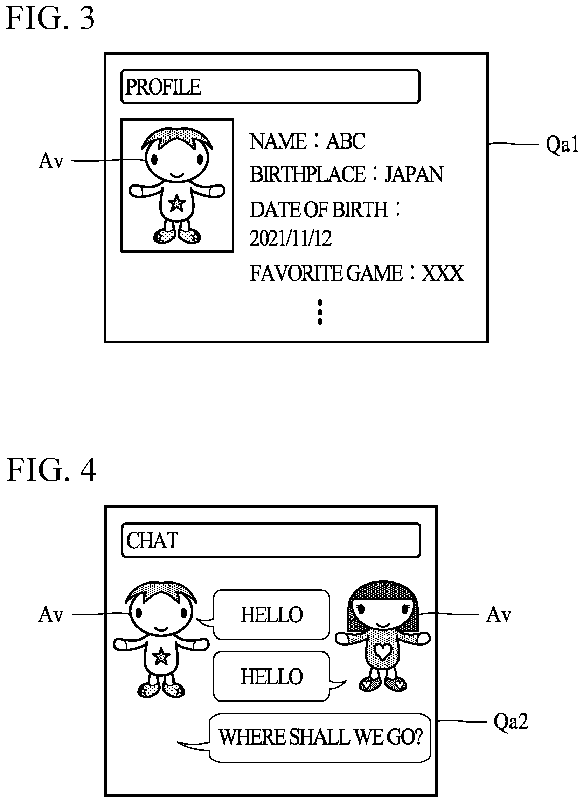

The control system 10 provides an interactive service to each of the plurality of terminal apparatuses 30. The interactive service is a service in which a plurality of users U interact with each other. Figs. 3 to 5 are each an explanatory diagram for the interactive service. In each of Figs. 3 to 5, an image (hereinafter referred to as "an interaction screen") Qa is shown that is displayed on the display 35 of each of the plurality of terminal apparatuses 30 in the interactive service. As shown in Figs. 3 to 5, an avatar Av of the user U that is each of the plurality of users U is used in the interactive service. The avatar Av is an object (for example, a character) representing the user U in the interactive service. An appearance of the avatar Av of the user U differs from an appearance of an avatar Av of each of the other users U. The interactive service according to the first embodiment includes a profile service, a chat service, and a virtual space service.

Fig. 3 is a schematic diagram showing an interaction screen Qa1 for the profile service. The profile service is an interactive service in which each of the plurality of users U refers to a profile of another user U of the plurality of users U. As shown in Fig. 3, on the interaction screen Qa1, the avatar Av of the user U is displayed together with a profile (for example, name, birthplace, date of birth, etc.) of the user U.

Fig. 4 is a schematic diagram showing an interaction screen Qa2 for the chat service. The chat service is an interactive service in which two or more users U among the plurality of users U exchange freely selected messages with each other. As shown in Fig. 4, on the interaction screen Qa2, an avatar Av of each of the two or more users U is displayed together with a time series of messages sequentially input by the two or more users U.

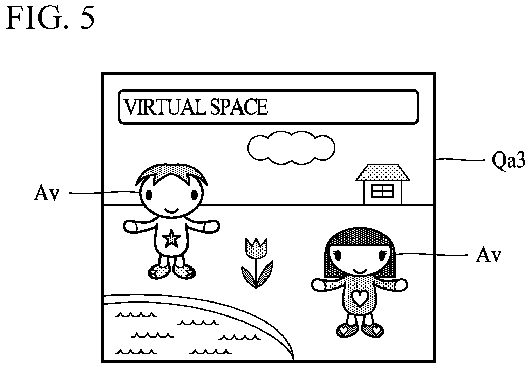

Fig. 5 is a schematic diagram showing an interaction screen Qa3 for the virtual space service. The virtual space service is an interactive service in which two or more users U among the plurality of users U interact with each other in a virtual space. As shown in Fig. 5, on the interaction screen Qa3, an avatar Av of each of the two or more users U in the virtual space is displayed. The avatar Av of each of the two or more users U moves in the virtual space in response to an instruction from a corresponding user U to the operation device 34. For example, the avatar Av of the corresponding user U interacts with an avatar Av of another user U among the two or more users U in the virtual space. As will be understood from the above examples, the avatar Av of the user U is an object representing the user U in the interactive service.

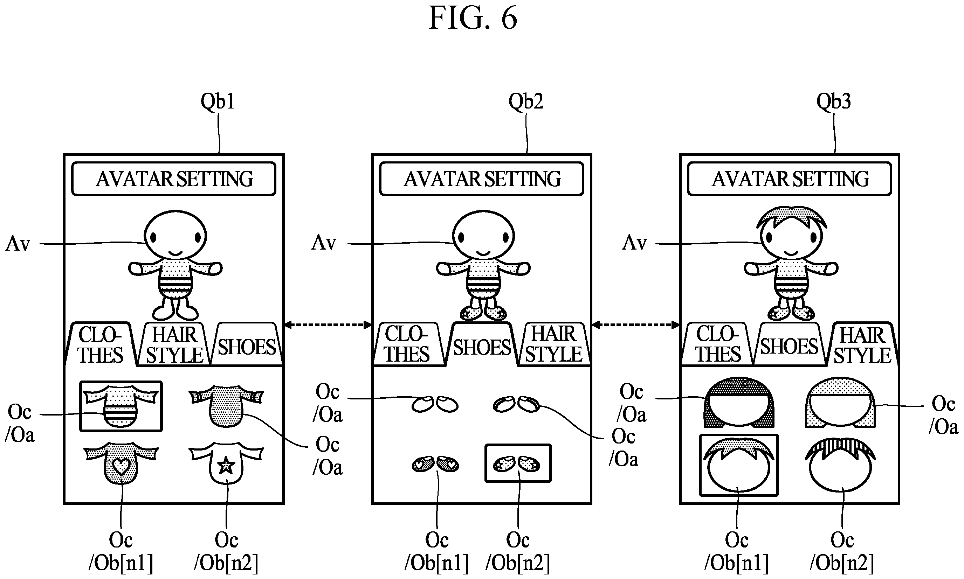

The control system 10 causes the display 35 of the terminal apparatus 30 to display a screen (hereinafter, referred to as "a setting screen") Qb for being used by the user U to set the avatar Av of the user U. Fig. 6 is a schematic diagram showing setting screens Qb (Qb1, Qb2, and Qb3). As shown in Fig. 6, a setting screen Qb is displayed for each part of a plurality of parts of a body (clothes, shoes, and hairstyle) of the avatar Av. The setting screen Qb for a part that is each part of the plurality of parts of the body is a screen for being used by the user U to select an object from among a plurality of objects (hereinafter referred to as "candidate objects") Oc that are applicable to the part.

A candidate object Oc that is each of the plurality of candidate objects Oc is an element that causes a change in the appearance of the avatar Av of the user U when the element is applied to the avatar Av. For example, each of a plurality of "clothes" candidate objects Oc on a setting screen Qb1 is an item representing clothes to be worn by the avatar Av. Each of a plurality of "shoes" candidate objects Oc on a setting screen Qb2 is an item representing shoes to be worn by the avatar Av. In addition, each of a plurality of "hairstyle" candidate objects Oc on a setting screen Qb3 is an item representing a hairstyle to be a part of the body of the avatar Av.

The user U of the terminal apparatus 30 can select a candidate object Oc from among the plurality of candidate objects Oc for each part of the plurality of parts of the avatar Av. As shown in Fig. 6, a candidate object Oc selected by the user U (hereinafter referred to as "a valid object") is applied to a corresponding part of the avatar Av among the plurality of parts of the avatar Av. As will be understood from the above description, the avatar Av of the user U is set to have an appearance corresponding to a combination of valid objects that are constituted of the valid object selected by the user U for each part of the plurality of parts of the avatar Av.

The plurality of candidate objects Oc selectable by the user U are divided between ordinary objects Oa and special objects Ob[n]. A special object Ob[n] that is each of the special objects Ob[n] is a candidate object Oc, the user U being permitted to apply the special object Ob[n] to the avatar Av in a state in which a specific condition (hereinafter referred to as "a permission condition") C[n] is satisfied in the game G[n]. An ordinary object Oa that is each of the ordinary objects Oa is a candidate object Oc, the user U being permitted to apply the ordinary object Oa to the avatar Av even in a state in which the permission condition C[n] is not satisfied in the game G[n].

As will be understood from the above description, in a state in which the permission condition C[n] is not satisfied in any games G[n] of a plurality of games G[n], one of a plurality of candidate objects Oc including only the ordinary objects Oa is selectively applied, as the valid object, to the avatar Av. In other words, the ordinary object Oa is an initial or stationary candidate object Oc. On the other hand, in a state in which the permission condition C[n] is satisfied in a game G[n] of the plurality of games G[n], one of a plurality of candidate objects Oc including a special object Ob[n] for the game G[n] together with the ordinary objects Oa is selectively applied, as the valid object, to the avatar Av. In other words, the permission condition C[n] for the game G[n] that is each of the plurality of games G[n] is a condition for permitting the user U to use the special object Ob[n] that is specific to the game G[n].

The special object Ob[n] corresponding to the game G[n] that is each of the plurality of games G[n] is an object having an appearance corresponding to the game G[n]. For example, as the specific object Ob[n] for the game G[n], an object having an appearance similar to an appearance of a character appearing in the game G[n], an object having an appearance associated with the world of the game G[n], or an object having an appearance associated with impression of the game G[n] is provided. For example, in a state in which heart marks are frequently used in a game G[nl], a special object Ob[n1] corresponding to the game G[n1] has one or more heart marks as shown in Fig. 6. On the other hand, in a state in which star marks are frequently used in a game G[n2] (n2 is not equal to n1), a special object Ob[n2] corresponding to the game G[n2] has one or more star marks as shown in Fig. 6. In other words, the special object Ob[n] is an object having an appearance that causes a large number of users U to recall a specific game G[n]. As will be understood from the above description, the special object Ob[n] may be referred to as an object that is specific to the game G[n]. For example, in a baseball game, a special object Ob[n] for baseball such as a baseball uniform, a baseball item, etc., is provided, and in a soccer game, a special object Ob[n] for soccer such as a soccer uniform, a soccer item, etc., is provided.

In Fig. 1, the game server 20[n] that is each of the plurality of game servers 20[n] is a computer system configured to provide a game service to each of the plurality of terminal apparatuses 30. The game service provided by the game server 20[n] is an information service that causes the user U to play the game G[n]. Each of the plurality of users U selectively plays one or more games G[n] among the plurality of games G[n] provided by the different game servers 20[n]. Each of the plurality of games G[n] is, for example, a computer game having a title that is different from those of the other games G[n]. The title is identification information assigned to the game G[n] to identify the game G[n], and typically means a heading (name) of the game.

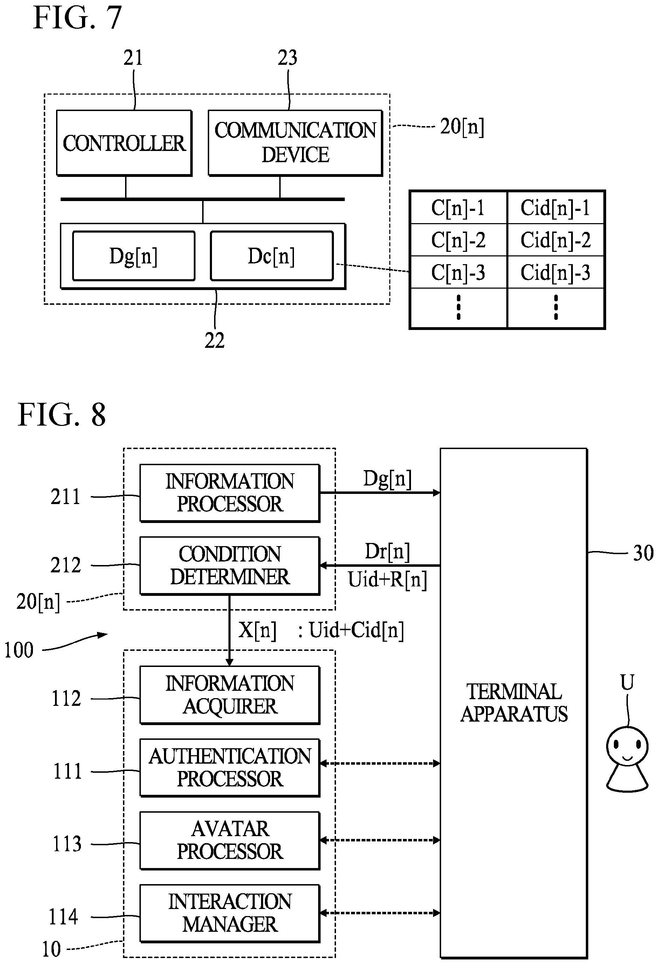

Fig. 7 is a block diagram showing a configuration of the game server 20[n]. As shown in Fig. 7, the game server 20[n] is a computer system that includes a controller 21, a storage device 22, and a communication device 23. The game server 20[n] may be constituted of a single integrated device, or alternatively may be constituted of a plurality of separate devices.

The controller 21 may be constituted of one or more processors configured to control components of the game server 20[n]. Specifically, the controller 21 may be constituted of one or more types of processors such as a CPU, a GPU, a DSP, an FPGA, an ASIC, etc. The communication device 23 communicates with the control system 10 and with each of the plurality of terminal apparatuses 30.

The storage device 22 comprises one or more memories configured to store a program that is to be executed by the controller 21 and a variety of types of data that is to be used by the controller 21. As the storage device 22, a known recording medium such as a semiconductor recording medium, a magnetic recording medium, etc., or a combination of different types of recording media may be used, for example. Alternatively, as the storage device 22, a portable recording medium that is detachable from the game server 20 or a recording medium (for example, a cloud storage server) that is accessible by the controller 21 via the communication network may be used, for example.

The storage device 22 of each of the plurality of game servers 20[n] stores game data Dg[n] for the user U that is each of the plurality of users U. The game data Dg[n] is data for the game G[n]. Specifically, the game data Dg[n] includes a variety of types of information such as an ability score of a character for the user U, a history of playing of the game G[n] by the user U, etc.

The storage device 22 according to the first embodiment further stores condition data Dc[n]. The condition data Dc[n] is a data table in which a relationship between the permission condition C[n] that is each of a plurality of permission conditions C[n] (C[n]-1, C[n]-2, ...) for the game G[n] and identification information Cid[n] (Cid[n]-1, Cid[n]-2, ...) of the permission condition C[n] is registered. The identification information Cid[n] is a sequence of codes for identifying the permission condition C[n] that is each of the plurality of permission conditions C[n].

As described above, the permission condition C[n] is a condition that can be satisfied in the course of playing of the game G[n] by the user U. The permission condition C[n] is, for example, a condition in which an ability score of the character used by the user U in the game G[n] should become a predetermined value, a condition in which the user U should clear a predetermined event in the game G[n], a condition in which the user U should acquire a predetermined performance in the game G[n], etc. The contents or total number of permission conditions C[n] specified by the condition data Dc[n] varies between the plurality of games G[n]. As will be understood from the above description, for one type of game G[n], the plurality of different permission conditions C[n] are stored in the storage device 22.

Fig. 8 is a block diagram showing a functional configuration of the information system 100. As shown in Fig. 8, the controller 21 of the game server 20 executes the program stored in the storage device 22 to implement a plurality of functions (an information processor 211 and a condition determiner 212).

The information processor 211 transmits the game data Dg[n] of the user U to the terminal apparatus 30 of the user U. The controller 31 of the terminal apparatus 30 progresses the game G[n] by applying the game data Dg[n]. When playing of the game G[n] is terminated, the controller 31 transmits result data Dr[n] from the communication device 33 to the game server 20[n]. The result data Dr[n] is data indicative of a result of the game G[n] played by the user U. Specifically, the result data Dr[n] includes identification information Uid of the user U and a playing result R[n]. The playing result R[n] indicates a variety of types of information such as an ability score of the character used by the user U in the game G[n], an event cleared by the user U in the game G[n], a performance obtained by the user U in the game G[n], etc. The communication device 23 of the game server 20[n] receives the result data Dr[n] from the terminal apparatus 30. The information processor 211 uses the result data Dr[n] to update the game data Dg[n].

The condition determiner 212 determines whether each of the plurality of permission conditions C[n] specified by the condition data Dc[n] is satisfied. Specifically, the condition determiner 212 uses the result data Dr[n] (specifically, the playing result R[n]), which is received from the terminal apparatus 30, to determine whether each of the plurality of permission conditions C[n] is satisfied. In other words, the result data Dr[n] is used not only to update the game data Dg[n], but also to determine whether each of the plurality of permission conditions C[n] is satisfied.

For example, the condition determiner 212 refers to the ability score of the character, which is indicated by the playing result R[n] of the result data Dr[n], to determine whether a permission condition C[n] is satisfied, the permission condition C[n] being a condition in which the ability score of the character should be greater than a predetermined value. In addition, the condition determiner 212 refers to the event that is cleared, which is indicated by the playing result R[n] of the result data Dr[n], to determine whether a permission condition C[n] is satisfied, the permission condition C[n] being a condition in which the user U should clear a predetermined event in the game G[n]. The condition determiner 212 refers to the performance, which is indicated by the playing result R[n] of the result data Dr[n], to determine whether a permission condition C[n] is satisfied, the permission condition C[n] being a condition in which the user U should acquire a predetermined performance in the game G[n]. In other words, the result data Dr[n] may be referred to as information for determining whether the permission condition C[n] is satisfied.

In a state in which the condition determiner 212 determines that the permission condition C[n] is satisfied, the condition determiner 212 transmits notification data X[n] from the communication device 13 to the control system 10. The notification data X[n] is information indicative of one or more permission conditions C[n] that are satisfied in the game G[n]. Specifically, the notification data X[n] includes the identification information Uid of the user U and identification information Cid[n] of each of the one or more permission conditions C[n] that are satisfied in the game G[n]. The identification information Cid[n] is information that is associated with each of the one or more permission conditions C[n] in the condition data Dc[n]. As will be understood from the above description, the game server 20[n] determines whether each of the plurality of permission conditions C[n] is satisfied and transmits the notification data X[n] to the control system 10 in response to determining that at least one permission condition C[n] of the plurality of permission conditions C[n] is satisfied. In other words, the notification data X[n] is data for notifying the control system 10 that at least one permission condition C[n] is satisfied due to playing of the game G[n] by the user U.

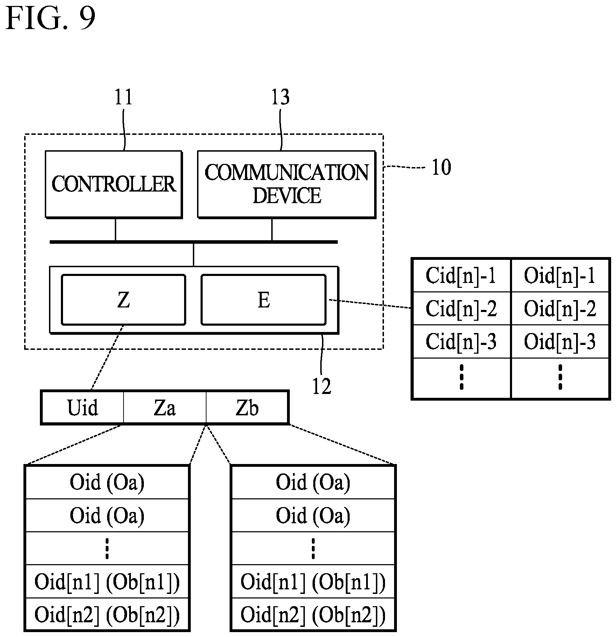

Fig. 9 is a block diagram showing a configuration of the control system 10. As shown in Fig. 9, the control system 10 is a computer system that includes a controller 11, a storage device 12, and a communication device 13. The control system 10 may be constituted of a single integrated device, or alternatively, may be constituted of a plurality of separate devices.

The controller 11 is constituted of one or more processors configured to control components of the control system 10. Specifically, the controller 11 may be constituted of one or more types of processors such as a CPU, a GPU, a DSP, an FPGA, an ASIC, etc. The communication device 13 communicates with each of the plurality of game servers 20[n] and with each of the plurality of terminal apparatuses 30.

The storage device 12 comprises one or more memories configured to store a program that is to be executed by the controller 11 and a variety of types of data that is to be used by the controller 11. As the storage device 12, a known recording medium such as a semiconductor recording medium, a magnetic recording medium, etc., or a combination of different types of recording media may be used, for example. Alternatively, as the storage device 12, a portable recording medium that is detachable from the control system 10 or a recording medium (for example, a cloud storage server) that is accessible by the controller 11 via the communication network may be used, for example.

The storage device 12 stores user data Z for each of the plurality of users U. As shown in Fig. 9, the user data Z for the user U who is each of the plurality of users U includes the identification information Uid of the user U, candidate data Za, and applying data Zb. The candidate data Za specifies one or more candidate objects Oc that are selectable by the user U on the setting screen Qb described above. Specifically, the candidate data Za includes identification information Oid of each of the one or more candidate objects Oc. The applying data Zb specifies one or more valid objects actually selected by the user U on the setting screen Qb. Specifically, the applying data Zb includes identification information Oid of each of the one or more valid objects. The applying data Zb may be referred to as data indicative of one or more candidate objects Oc applied to the avatar Av of the user U.

The storage device 12 stores registration data E. As shown in Fig. 9, the registration data E is a data table in which, for each of the plurality of games G[n], a relationship between the permission condition C[n] and the special object Ob[n] is registered. Specifically, in the registration data E, identification information Cid[n] (Cid[n]-1, Cid[n]-2, ...) of the permission condition C[n] that is each of the plurality of permission conditions C[n] is associated with dentification information Oid[n] (Oid[n]-1, Oid[n]-2, ...) of the special object Ob[n] that is permitted to be selected when the permission condition C[n] is satisfied.

As shown in Fig. 8, the controller 11 of the control system 10 executes the program stored in the storage device 12 to implement a plurality of functions (an authentication processor 111, an information acquirer 112, an avatar processor 113, and an interaction manager 114). The authentication processor 111 executes authentication processing for the user U of each of the plurality of terminal apparatuses 30. The authentication processing is processing to confirm that the user U is a user registered in advance.

The information acquirer 112 acquires the notification data X[n] from each of the plurality of game servers 20[n]. Specifically, the information acquirer 112 receives the notification data X[n], which is transmitted from each of the plurality of game servers 20[n], by use of the communication device 13. As described above, the notification data X[n] is transmitted from the game server 20[n] in response to the permission condition C[n] being satisfied. Thus, the information acquirer 112 acquires the notification data X[n] from the game server 20[n] in a state in which the permission condition C[n] is satisfied in the game G[n] played by the user U. The information acquirer 112 registers, as a plurality of candidate objects Oc selectable by the user U, the plurality of special objects Ob[n] corresponding to the one or more permission conditions C[n] indicated by the notification data X[n].

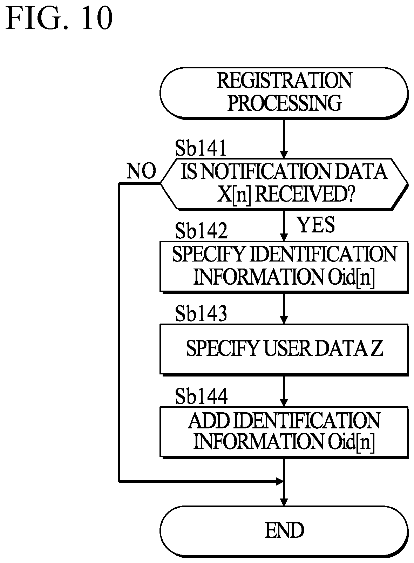

Fig. 10 is a flowchart showing a detailed processing procedure (hereinafter referred to as "registration processing") executed by the information acquirer 112 of the control system 10. The registration processing is repeated, for example, at predetermined time intervals.

When the registration processing starts, the information acquirer 112 determines whether the communication device 13 receives the notification data X[n] from a game server 20[n] of the plurality of game servers 20[n] (Sb141). When the notification data X[n] is not received (Sb141: NO), the information acquirer 112 terminates the registration processing.

On the other hand, when the notification data X[n] is received (Sb141: YES), the information acquirer 112 specifies identification information Oid[n], which is associated with the identification information Cid[n] included in the notification data X[n], from among the identification information Oid registered in the registration data E (Sb142). In other words, one or more special objects Ob[n], which correspond to the one or more satisfied permission conditions C[n] that are indicated by the notification data X[n], are specified.

The information processor 211 specifies user data Z, which corresponds to the identification information Uid included in the notification data X[n], from the storage device 12 (Sb143). In other words, the user data Z of the user U for the one or more satisfied permission conditions C[n] is specified. The order of the specifying of the identification information Oid[n] (Sb142) and the specifying of the user data Z (Sb143) may be reversed.

The information processor 211 adds the identification information Oid[n] specified in step Sa2 to the candidate data Za of the user data Z specified in step Sb143 (Sb144). In other words, the one or more special objects Ob[n] corresponding to the one or more permission conditions C[n] that are satisfied due to the playing of the game G[n] by the user U are added as one or more candidate objects Oc selectable by the user U. The registration processing is described above.

In Fig. 8, the avatar processor 113 manages the avatar Av of each of the plurality of users U. Specifically, the avatar processor 113 adds, to the applying data Zb, identification information Oid of a candidate object Oc selected by the user U on the setting screen Qb, the candidate object Oc being among the plurality of candidate objects Oc specified by the candidate data Za of the user data Z. In other words, the candidate object Oc selected by the user U is applied, as a valid object, to the avatar Av of the user U. In addition, the avatar processor 113 generates an image of the avatar Av of the user U in the interactive service by applying one or more valid objects selected by the user U to an initial avatar Av.

The interaction manager 114 provides the interactive service described above to each of the plurality of terminal apparatuses 30. Specifically, the interaction manager 114 transmits image data of the interaction screen Qa (Qa1, Qa2, Qa3) shown in Fig. 3 to Fig. 5 to the terminal apparatus 30 to cause the display 35 to display the interaction screen Qa. As described above, on the interaction screen Qa, the avatar Av generated by the avatar processor 113 is displayed.

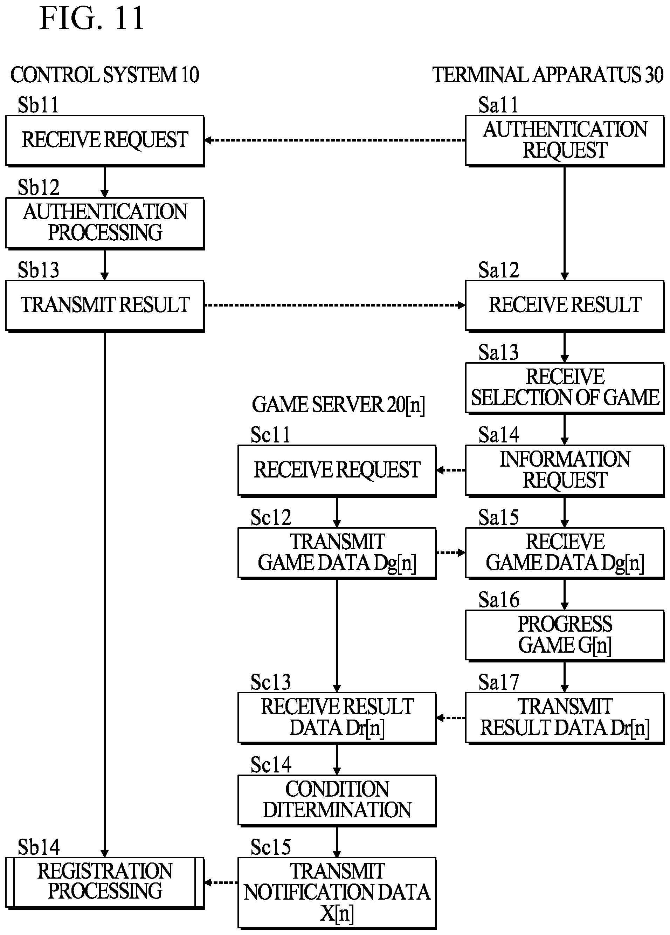

Fig. 11 is a flowchart showing a processing procedure that is executed by the terminal apparatus 30 and the information system 100 when the user U starts playing the game G[n]. When the user U operates the operation device 34 to provide an instruction to start operation, the controller 31 of the terminal apparatus 30 transmits an authentication request from the communication device 33 to the control system 10 (Sa11). The authentication request includes the identification information Uid of the user U.

The controller 11 of the control system 10 receives the authentication request transmitted from the terminal apparatus 30 by use of the communication device 13 (Sb11). The controller 11 executes the authentication processing using the identification information Uid included in the authentication request (Sb12). Specifically, the controller 11 determines validity of the user U depending on whether user data Z including the identification information Uid in the authentication request is stored in the storage device 12. The controller 11 transmits a result of the authentication processing (hereinafter referred to as "an authentication result") from the communication device 13 to the terminal apparatus 30 that is a requester (Sb13). The authentication processor 111 is implemented by the controller 11 executing the above processing (Sb11 to Sb13).

The controller 31 of the terminal apparatus 30 receives the authentication result transmitted from the control system 10 by use of the communication device 33 (Sa12). When the authentication result is successful, the controller 31 receives selection of a game G[n] from among the plurality of games G[n] by the user U (Sa13). The controller 31 transmits an information request from the communication device 33 to a game server 20[n] for the game G[n] selected by the user U (Sa14). The information request includes the identification information Uid of the user U.

The controller 21 of the game server 20[n] receives the information request by use of the communication device 23 (Sc11). The controller 21 transmits the game data Dg[n] of the user U to the terminal apparatus 30 that is a requester (Sc12). Specifically, the controller 21 acquires the game data Dg[n], which corresponds to the identification information Uid in the information request, from the storage device 22 and transmits the game data Dg[n] from the communication device 23 to the terminal apparatus 30 that is a requester. The information processor 211 is implemented by the controller 21 executing the above processing (Sc11, Sc12).

The controller 31 of the terminal apparatus 30 receives the game data Dg[n] by use of the communication device 33 (Sa15). The controller 31 controls progress of the game G[n] by applying the game data Dg[n] (Sa16). Specifically, the controller 31 progresses the game G[n] depending on instructions from the user U to the operation device 34. When the authentication result is unsuccessful, transmission and reception (Sa14, Sc11) of the information request and reception (Sa15, Sc12) of the game data Dg[n] are not executed. As will be understood from the above description, in the first embodiment, the game service for each of the plurality of games G[n] is provided to the user U on condition that the authentication processing executed by the control system 10 is successful. In other words, when the control system 10 succeeds in the authentication processing once, the user U can selectively play at least one of the plurality of games G[n]. Thus, compared to a configuration in which individual authentication processing is required for each of the plurality of games G[n], the user U can play each of the plurality of games G[n] through a convenient procedure. As will be understood from the above description, the control system 10 is a portal server configured to control the plurality of game servers 20 [n].

The user U can operate the operation device 34 to provide an instruction to terminate the game G[n]. When the user U terminates the playing of the game G[n], the controller 31 of the terminal apparatus 30 transmits the result data Dr[n] to the game server 20[n] (Sa17). The result data Dr[n] includes the identification information Uid and the playing result R[n] as described above.

The controller 21 of the game server 20[n] receives the result data Dr[n] by use of the communication device 23 (Sc13). The controller 21 determines, for the user U, whether each of the plurality of permission conditions C[n] specified by the condition data Dc[n] is satisfied (Sc14). Specifically, the controller 21 refers to the playing result R[n] of the result Dr[n] to determine whether each of the plurality of permission conditions C[n] is satisfied. Then, when the controller 21 determines that one permission condition C[n] of the plurality of permission conditions C[n] designated by the condition data Dc[n] is satisfied, the controller 21 transmits the notification data X[n] from the communication device 23 to the control system 10 (Sc15). The condition determiner 212 shown in Fig. 8 is implemented by the controller 21 executing the above processing (Sc13 to Sc 15). When none of the plurality of permission conditions C[n] are satisfied, the transmission of the notification data X[n] to the control system 10 is not executed.

The controller 11 of the control system 10 executes the registration processing shown in Fig. 10 (Sb14). Specifically, the controller 11 adds, as one or more candidate objects Oc for the user U, one or more special objects Ob[n] corresponding to one or more permission conditions C[n] that are satisfied for the user U. In other words, the controller 11 functions as the information acquirer 112 shown in Fig. 8.

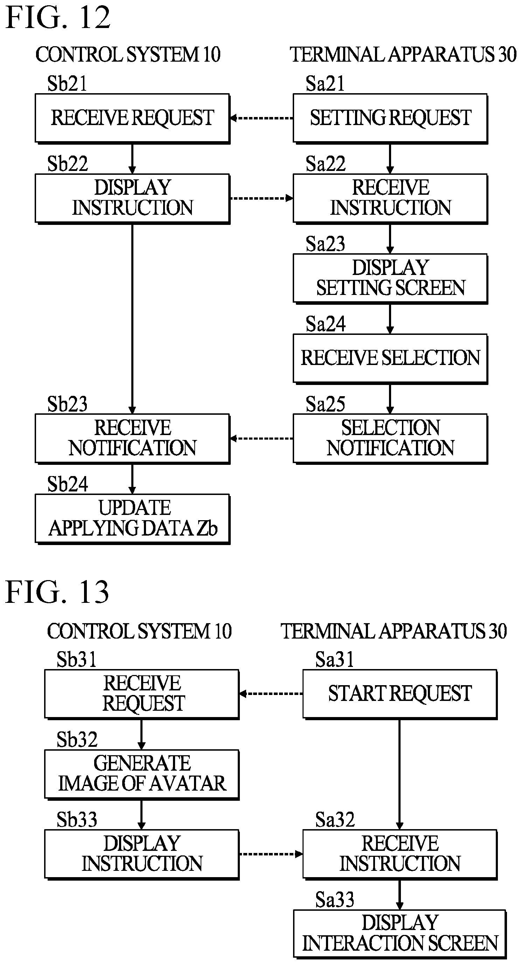

Fig. 12 is a flowchart showing an operation of setting of the avatar Av. When the user U operates the operation device 34 to provide an instruction to set the avatar Av, the controller 31 of the terminal apparatus 30 transmits a setting request from the communication device 33 to the control system 10 (Sa21). The setting request includes the identification information Uid of the user U.

The controller 11 of the control system 10 receives the setting request by use of the communication device 13 (Sb21). The controller 11 transmits a display instruction for the setting screen Qb from the communication device 13 to the terminal apparatus 30 that is a requester (Sb22). Specifically, the controller 11 specifies the user data Z corresponding to the identification information Uid in the setting request from the storage device 12, and transmits, as the display instruction for the setting screen Qb, the candidate data Za included in the user data Z to the terminal apparatus 30. The controller 31 of the terminal apparatus 30 receives the display instruction including the candidate data Za by use of the communication device 33 (Sa22). The controller 31 causes the display 35 to display the setting screen Qb shown in Fig. 6 including the plurality of candidate objects Oc specified by the candidate data Za (Sa23). The image of each of the plurality of candidate objects Oc is displayed by using image data previously stored in the storage device 32 of the terminal apparatus 30 or by using image data received together with the candidate data Za from the control system 10, for example.

In the registration processing described above, a special object Ob[n] corresponding to a satisfied permission condition C[n] is registered in the candidate data Za. Thus, the plurality of candidate objects Oc displayed on the setting screen Qb includes, as shown in Fig. 6, not only the plurality of ordinary objects Oa, but also the special objects Ob[n] corresponding to the satisfied permission conditions C[n]. The user U operates the operation device 34 to select a desired candidate object Oc from among the plurality of candidate objects Oc for each part of the plurality of parts of the avatar Av. Specifically, the user U can select one candidate object Oc from among the plurality of candidate objects Oc that includes the ordinary objects Oa and the special objects Ob[n]. The controller 31 receives the selection of the candidate object Oc by the user U (Sa24). The controller 31 transmits a selection notification from the communication device 33 to the control system 10 (Sa25). The selective notification includes identification information Oid of one or more candidate objects Oc selected by the user U.

The controller 11 of the control system 10 receives the selection notification by use of the communication device 13 (Sb23). The controller 11 updates the applying data Zb for the user U depending on a result of the selection of candidate object Oc by the user U (Sb24). For example, when a candidate object Oc is newly selected for each part of the plurality of parts of the avatar Av, the controller 11 adds the identification information Oid of the candidate object Oc to the applying data Zb. When the candidate object Oc for each part of the plurality of parts of the avatar Av is changed to a new candidate object Oc, the controller 11 changes the identification information Oid in the applying data Zb to identification information Oid of the new candidate object Oc. In other words, the candidate object Oc selected by the user U is set as a valid object. The avatar processor 113 is implemented by the controller 11 executing the above processing (Sb23, Sb24).

Fig. 13 is a flowchart showing an operation for the interactive service. When the user U operates the operation device 34 to provide an instruction to start a desired interactive service, the controller 31 of the terminal apparatus 30 transmits a start request for the interactive service from the communication device 33 to the control system 10 (Sa31). The start request includes the identification information Uid of the user U.

The controller 11 of the control system 10 receives the start request by use of the communication device 13 (Sb31). The controller 11 generates an image of the avatar Av of the user U (Sb32). Specifically, the controller 11 acquires, from the storage device 12, the applying data Zb of the user data Z corresponding to the identification information Uid in the start request. The controller 11 generates the avatar Av of the user U by applying one or more valid objects, which are indicated by the identification information Oid specified by the applying data Zb, to the initial avatar Av. In other words, the controller 11 functions as the avatar processor 113 configured to apply the one or more valid objects to the avatar Av of the user U.

A point of time at which the avatar Av of the user U is generated is not limited to the above example. For example, the controller 11 may generate the avatar Av of the user U at a stage at which the controller 11 updates the applying data Zb for the user U in the processing shown in Fig. 12 (for example, immediately after step Sb24). The processing to generate the image of the avatar Av of the user U is not always required. For example, when an interactive service is assumed in which a three-dimensional avatar Av is disposed in a virtual space as shown in Fig. 5, the controller 11 may specify part data of a part indicated by the identification information Oid specified by the applying data Zb and then register the part data for the user U to generate a 3D model of the avatar Av.

The controller 11 causes the terminal apparatus 30 that is a requester to display the interaction screen Qa including the avatar Av of the user U (Sb33). Specifically, the controller 11 transmits the image data of the interaction screen Qa including the avatar Av of the user U from the communication device 13 to the terminal apparatus 30. The controller 31 of the terminal apparatus 30 receives a display instruction for the interaction screen Qa by use of the communication device 33 (Sa32), and then causes the display 35 to display the interaction screen Qa indicated by the image data (Sa33). In other words, the interaction screen Qa (Qa1 to Qa3) shown in Fig. 3 to Fig. 5 is displayed on the display 35. The operation of the information system 100 and the operation of the terminal apparatus 30 are described above.

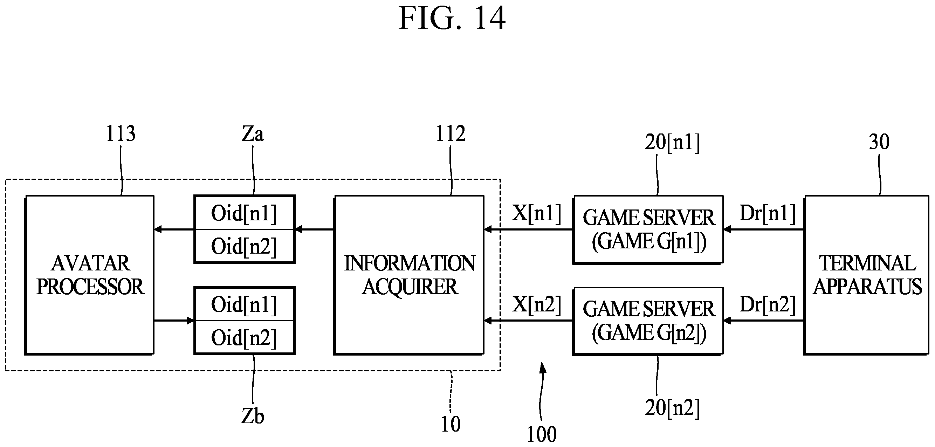

As shown in Fig. 14, it is assumed that the user U plays two different types of games G[n] (G[n1] and G[n2]) (n1 and n2 are different natural numbers). A game server 20[n1] is configured to provide a game service in which the user U is allowed to play the game G[n1]. A game server 20[n2] is configured to provide a game service in which the user U is allowed to play the game G[n2].

When a permission condition C[n1] is satisfied in the game G[n1] played by the user U, the game server 20[n1] transmits notification data X[n1], which specifies the permission condition C[n1], to the control system 10. The controller 11 of the control system 10 (information acquirer 112) acquires the notification data X[n1] from the game server 20[n1]. In other words, the controller 11 acquires the notification data X[n1] from the game server 20[n1], which provides the game service of the game G[nl], when the permission condition C[n1] is satisfied in use of the game service. The controller 11, which implements functions described above, corresponds to "a first information acquirer," and the notification data X[n1] is an example of "first information." The game server 20[n1] is an example of "a first system," and the game service of the game G[n1] is an example of "a first information service." The permission condition C[n1] is an example of "a first condition."

The controller 11 adds identification information Oid[n1], which corresponds to identification information Cid[n1] specified by the notification data X[n1], to the candidate data Za. In other words, a special object Ob[n1] corresponding to the permission condition C[n1] satisfied in the game G[n1] is added to the candidate objects Oc for the user U. The special object Ob[n1] is an example of "a first object."

On the other hand, when a permission condition C[n2] is satisfied in the game G[n2] played by the user U, the game server 20[n2] transmits notification data X[n2], which specifies the permission condition C[n2], to the control system 10. The controller 11 (information acquirer 112) of the control system 10 acquires the notification data X[n2] from the game server 20[n2]. In other words, the controller 11 acquires the notification data X[n2] from the game server 20[n2], which provides the game service of the game G[n2], when the permission condition C[n2] is satisfied in use of the game service. The controller 11, which implements functions described above, corresponds to "a second information acquirer," and the notification data X[n2] is an example of "second information." The game server 20[n2] is an example of "a second system," and the game service of the game G[n2] is an example of "a second information service." The permission condition C[n2] is an example of "a second condition."

The controller 11 (information acquirer 112) adds identification information Oid[n2], which corresponds to identification information Cid[n2] specified by the notification data X[n2], to the candidate data Za. In other words, a special object Ob[n2] corresponding to the permission condition C[n2] satisfied in the game G[n2] is added to the candidate objects Oc for the user U. The special object Ob[n2] is an example of "a second object." Due to the operations described above, as will be understood from Fig. 14, the special object Ob[n1] (identification information Oid[n1]) corresponding to the game G[n1] and the special object Ob[n2] (identification information Oid[n2]) corresponding to the game G[n2] are included in the plurality of candidate objects Oc for the user U.

The controller 11 (avatar processor 113) applies one or more valid objects to the avatar Av of the user U, the one or more valid objects being among the plurality of candidate objects Oc that includes the special object Ob[n1] and the special object Ob[n2]. For example, when the user U selects the special object Ob[n1] and the special object Ob[n2] as valid objects, the identification information Oid[n1] and the identification information Oid[n2] are registered in the applying data Zb for the user U as shown in Fig. 14. In other words, the controller 11 applies the special object Ob[n1] and the special object Ob[n2] in parallel to the avatar Av of the user U.

As described above, in the first embodiment, when the permission condition C[n1] is satisfied in the game G[n1] played by the user U, the special object Ob[n1] corresponding to the game G[n1] becomes available. When the permission condition C[n2] is satisfied in the game G[n2] played by the user U, the special object Ob[n2] corresponding to the game G[n2] becomes available. Then, one or more valid objects among the plurality of candidate objects Oc are applied to the avatar Av that is to be used for the interactive service. In other words, a history state of playing of the different diverse games G[n] by the user U is reflected in the avatar Av of the user U. Thus, other users U of the interactive service can infer the game G[n] (G[n1], G[n2]), which was played by the user U among the different diverse games G[n], from an appearance of the avatar Av of the user U. When the permission condition C[n] is satisfied in the game G[n], the special object Ob[n] corresponding to the game G[n] becomes applicable to the avatar Av. Thus, it is possible to encourage the user U to play the game G[n].

In the first embodiment, the special object Ob[n1] corresponding to the game G[n1] and the special object Ob[n2] corresponding to the game G[n2] are applied in parallel to the avatar Av. Thus, from the avatar Av to which the special object Ob[n1] and the special object Ob[n2] are applied, it is inferred that the user U played both the game G[n1] and the game G[n2].

In the first embodiment, although each of the plurality of game servers 20[n] determines whether the permission condition C[n] is satisfied, a configuration (hereinafter referred to as "a comparative example") is assumed in which the control system 10 determines whether each of the plurality of permission conditions C[n] is satisfied. In the comparative example, the controller 11 of the control system 10 uses the result data Dr[n] to determine whether the permission condition C[n] is satisfied for each of the plurality of games G[n]. However, in the comparative example, the result data Dr[n] is transmitted from the game server 20[n] to the control system 10 each time the game G[n] is played in each of the plurality of terminal apparatuses 30. Thus, there is possibility that an amount of communication between the control system 10 and each of the plurality of game servers 20[n] is excessive. In contrast with the comparative example, in the first embodiment, the game server 20[n], which is each of the plurality of game servers 20[n], determines whether the permission condition C[n] is satisfied, and when the permission condition C[n] is satisfied, the notification data X[n] is transmitted from the game server 20[n] to the control system 10. When the permission condition C[n] is not satisfied, the notification data X[n] is not transmitted to the control system 10. Thus, according to the first embodiment, an amount of communication between the control system 10 and each of the plurality of game servers 20[n] can be reduced compared to the comparative example. In addition, since the game server 20[n] determines whether the permission condition C[n] is satisfied, an advantage is obtained in that a processing load of the control system 10 is reduced compared to the comparative example. In a state in which an amount of communication or a processing load, etc., is not a particular disadvantage, the control system 10 may determine whether each of the plurality of permission conditions C[n] is satisfied. In other words, this disclosure includes the comparative example.

### Second Embodiment

A second embodiment according to this disclosure will be described. In the descriptions of the following embodiments, elements having the same functions as in the first embodiment are denoted by the same reference numerals as used for like elements in the description of the first embodiment, and detailed description thereof is omitted, as appropriate.

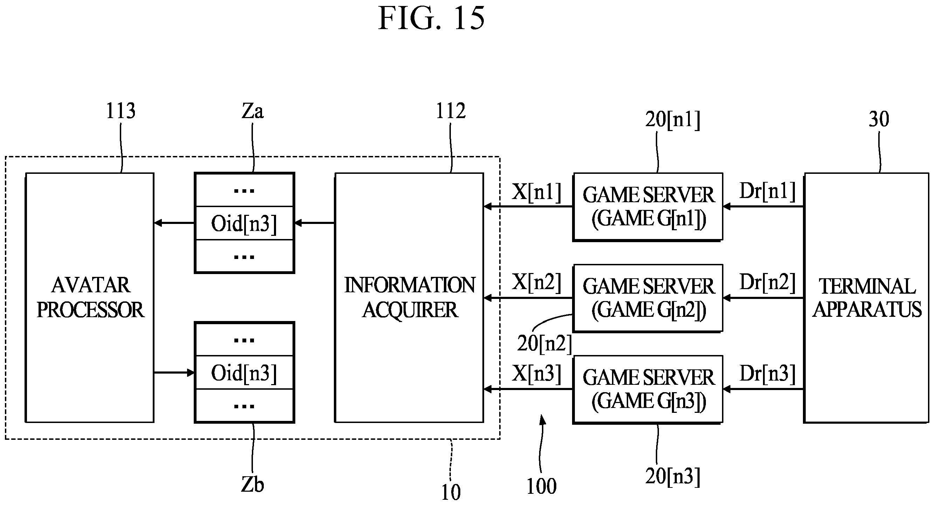

Fig. 15 is an explanatory diagram showing an operation of the information system 100 according to the second embodiment. A configuration of the information system 100 in the second embodiment is substantially the same as that of the first embodiment. As shown in Fig. 15, in the second embodiment, a game server 20[n3] is assumed (n3 is not equal to n1 and to n2) in addition to the game server 20[n1] and to the game server 20[n2]. The game server 20[n3] provides a game service in which the user U is allowed to play a game G[n3]. The game server 20[n3] is an example of "a third system," and the game service of the game G[n3] is an example of "a third information service."

When a permission condition C[n3] is satisfied in the game G[n3] played by the user U, the game server 20[n3] transmits notification data X[n3], which specifies the permission condition C[n3], to the control system 10. In other words, the controller 11 (information acquirer 112) of the control system 10 acquires the notification data X[n3] from the game server 20[n3] when the permission condition C[n3] is satisfied in the game G[n3]. The controller 11, which implements functions described above, corresponds to "a third information acquirer," and the notification data X[n3] is an example of "third information."

The controller 11 (information acquirer 112) according to the second embodiment adds a special object Ob[n3], which corresponds to a combination of the notification data X[n1] and the notification data X[n3], to the plurality of candidate objects Oc for the user U. Specifically, when the controller 11 acquires the notification data X[n1] and the notification data X[n3], the controller 11 adds identification information Oid[n3] of the special object Ob[n3] corresponding to the combination to the candidate data Za for the user U. As will be understood from the above explanation, the special object Ob[n3] is added to the candidate objects Oc for the user U on condition that both the permission condition C[n1] for the game G[n1] and the permission condition C[n3] for the game G[n3] are satisfied. In other words, when the permission condition C[n1] is satisfied in the game G[n1] played by the user U and the permission condition C[n3] is satisfied in the game G[n3] played by the user U, the user U can select the special object Ob[n3]. When only the permission condition C[n3] is satisfied (that is, when the permission condition C[n1] is not satisfied), the special object Ob[n3] cannot be added to the candidate objects Oc. The special object Ob[n3] is an example of "a third object." As in the first embodiment, the controller 11 (avatar processor 113) applies the one or more valid objects to the avatar Av of the user U, the one or more valid objects being selected by the user U from among the plurality of candidate objects Oc.

In the second embodiment, as in the first embodiment, the controller 11 (information acquirer 112) adds the identification information Oid[n1] to the candidate data Za in response to acquiring the notification data X[n1], and the controller 11 (information acquirer 112) adds the identification information Oid[n2] to the candidate data Za in response to acquiring the notification data X[n2]. However, regarding the notification data X[n1], only the combination of the notification data X[n1] and the notification data X[n3] may be considered. In other words, when the notification data X[n1] is acquired, but the notification data X[n3] is not acquired, the controller 11 is not required to add the identification information Oid[n1] to the candidate data Za.

The second embodiment provides the same effects as those provided by the first embodiment. In the second embodiment, the special object Ob[n3], which corresponds to the combination of the notification data X[n1] acquired in response to the permission condition C[n1] being satisfied and the notification data X[n3] acquired in response to the permission condition C[n3] being satisfied, is included in the candidates for application to the avatar Av. In other words, the user U needs to play both the game G[n1] and the game G[n3] so as to use the special object Ob[n3]. Thus, it is possible to effectively encourage playing of the game G[n1] and of the game G[n3].

In the above explanation, a configuration is described in which the special object Ob[n1] is added to the candidate objects Oc for the user U when the permission condition C[n1] is satisfied; however, a configuration is assumed in which the special object Ob[n1] is not added when only the permission condition C[n1] is satisfied. In other words, the special object Ob[n] may be added only when both the permission condition C[n1] and the permission condition C[n3] are satisfied. In the above explanation, a configuration is described in which the special object Ob[n] is not added when only the permission condition C[n3] is satisfied; however, the special object Ob[n] may be added when only the permission condition C[n3] is satisfied.

### Third Embodiment

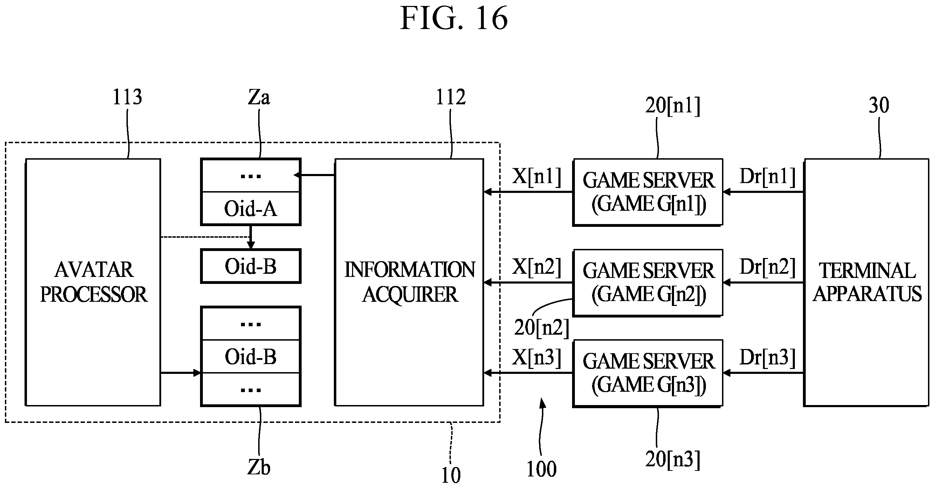

Fig. 16 is an explanatory diagram showing an operation of the information system 100 according to a third embodiment. As shown in Fig. 16, in the third embodiment, the game server 20[n3] is assumed in addition to the game server 20[n1] and to the game server 20[n2], as in the second embodiment (n3 is not equal to n1 and to n2). The game server 20[n3] provides the game service in which the user U is allowed to play the game G[n3]. The game server 20[n3] is an example of "a third system," and the game service of the game G[n3] is an example of "a third information service."

As in the second embodiment, when the permission condition C[n3] is satisfied in the game G[n3] played by the user U, the game server 20[n3] transmits the notification data X[n3], which specifies the permission condition C[n3], to the control system 10. In other words, the controller 11 (information acquirer 112) of the control system 10 acquires the notification data X[n3] from the game server 20[n3] when the permission condition C[n3] is satisfied in the game G[n3]. The controller 11, which implements functions described above, corresponds to "a third information acquirer," and the notification data X[n3] is an example of "third information."

In Fig. 16, it is assumed that identification information Oid-A of a candidate object Oc-A is registered in the candidate data Za before the notification data X[n3] is acquired. The candidate object Oc-Ais a special object Ob[n], which is added as a candidate object Oc in response to a permission condition C[n] in a specific game G[n], or is an ordinary object Oa, which is registered as an initial candidate object Oc. The candidate object Oc-A is an example of "a third object."

When the notification data X[n3] is acquired in response to the permission condition C[n3] being satisfied, the controller 11 (avatar processor 113) changes the existing candidate object Oc-A to a candidate object Oc-B. Specifically, the controller 11 changes the identification information Oid-A of the candidate data Za to identification information Oid-B of the candidate object Oc-B. As in the first embodiment, the controller 11 (avatar processor 113) applies the one or more valid objects to the avatar Av of the user U, the one or more valid objects being selected by the user U from among the plurality of candidate objects Oc. Thus, when the user U selects the candidate object Oc-B, the controller 11 (avatar processor 113) applies, as a valid object, the candidate object Oc-B to the avatar Av. The candidate object Oc-B is an example of "a third object after change."

The third embodiment provides the similar effects as those provided by the first embodiment. In the third embodiment, the existing candidate object Oc-A is changed depending on the notification data X[n3] acquired in response to the permission condition C[n3] being satisfied. Thus, it is possible to encourage use of the game G[n3], and it is possible to diversify the appearance of the avatar Av compared to a configuration in which the candidate object Oc-A is not changed.

### Modifications

Each of the embodiments described above may be variously modified. Examples of specific modifications that may be applied to the above embodiments will be described below. Two or more modifications freely selected from the following modifications may be combined as long as no conflict arises from such combination.

(1) In each of the foregoing embodiments, a configuration is described in which the candidate object Oc selected by the user U from among the plurality of candidate objects Oc is unconditionally applied to the avatar Av; however, a configuration is assumed in which the candidate object Oc is applied to the avatar Av in exchange for use of a value medium possessed by the user U. The value medium is a medium having value, which is used in exchange for use of the interactive service, such as money (physical or electronic money) usable for the interactive service, points usable for the interactive service, etc. A quantity of value media required to apply the candidate object Oc may be set individually for each of the special objects Ob[n]. Alternatively, a configuration is assumed in which the ordinary object Oa is applied to the avatar Av without requiring use of the value medium, whereas use of the value medium is required only for the special object Ob[n].
   Alternatively, a configuration is assumed in which, when the permission condition C[n] is satisfied, the special object Ob[n] corresponding to the permission condition C[n] is applied, as a valid object, to the avatar Av. In other words, it may be omitted that the user U selects a valid object from among the plurality of candidate objects Oc.
(2) In each of the foregoing embodiments, a configuration is described in which the special object Ob[n] is added to the candidate objects Oc when the permission condition C[n] is satisfied; however, a condition other than the condition in which the permission condition C[n] should be satisfied may be required to add the special object Ob[n]. For example, the special object Ob[n] may be added to the candidate objects Oc when the permission condition C[n] is satisfied and the user U uses a predetermined quantity of value media. The configuration described above may be referred to as a configuration in which a right to purchase the special object Ob[n] by use of the value medium is provided to the user U when the permission condition C[n] is satisfied.
(3) In the second embodiment described above, a configuration is described in which the special object Ob[n3] is added to the candidate objects Oc when both the permission condition C[n1] and the permission condition C[n3] are satisfied; however, the total number of conditions required to add the special object Ob[n3] is not limited to the above example. For example, the special object Ob[n3] may be added to the candidate objects Oc when three or more permission conditions C[n] are satisfied. In the second embodiment, the condition is used in which a plurality of permission conditions C[n] (C[nl] and C[n3]) corresponding to the different games G[n] should be satisfied; however, a configuration is assumed in which the special object Ob[n] may be added to the candidate objects Oc when a plurality of different permission conditions C[n] (C[n]-1, C[n]-2) in one type of game G[n] is satisfied.
(4) In each of the foregoing embodiments, the game service is described in which the user U is allowed to play the game G[n]; however, this disclosure may be applied to a freely selected type of information service that is not limited to the game service. The "information service" is, for example, an SNS in which each of the plurality of users U can post information and can interact with other users U, an electronic commerce service in which the user U purchases a variety of types of products, a delivery service in which the user U watches and listens to a variety of types of digital content such as video, music, etc., an information retrieval service in which the user U can search for desired information, or an interactive service in which the plurality of users U interact with each other, etc.

The permission condition C[n] in the SNS is, for example, a condition in which the number of times that the user U posts or quotes information should reach a predetermined value, a condition in which the number of times that information posted by the user U is evaluated affirmatively (the so-called number of good") should reach a predetermined value, or a condition in which the number of followers of the user U should reach a predetermined value, etc. In addition, examples of the permission condition C[n] in the SNS may also include a condition in which the user U should follow a specific user, a condition in which the user U should be followed by a specific user, or a condition in which the user U and a specific user should follow each other. A configuration is preferable in which, when the permission condition C[n] that a follow/follower relationship with a specific user should be registered is satisfied, a special object Ob[n] specific to the specific user is provided to or is permitted for the user U. For example, an object related to an impression of the specific user or an object created by the specific user is provided, as a special object Ob[n], to the user U.

The permission condition C[n] in the electronic commerce service, for example, a condition in which a total amount of purchase through electronic commerce should reach a predetermined value, a condition in which the number of purchases should reach a predetermined value, or a condition in which a specific product should be purchased, etc. The permission condition C[n] in the delivery service is, for example, a condition in which the number of times that the user U watches content should reach a predetermined value, or a condition in which the user U should watch specific content, etc. The permission condition C[n] in the information retrieval service, for example, a condition in which the number of times of search should reach a predetermined value, etc. The permission condition C[n] in the interactive service is, for example, a condition in which the total number of established interaction relationships (follow/follower relationships) to the user U should reach a predetermined value, or a condition in which the number of times that the user U interacts with other users U should reach a predetermined value, etc.

In each of the foregoing embodiments, a configuration is described in which the plurality of game servers 20[n] provides the same type of information service (game service); however, the plurality of servers constituting the information system 100 may provide different types of information services.

(5) In each of the foregoing embodiments, the notification data X[n] is described that includes the identification information Cid[n] of the permission condition C[n]; however, the format or the contents of the notification data X[n] is not limited to the above example. For example, the notification data X[n] may include the identification information Oid[n] of the special object Ob[n] corresponding to the permission condition C[n]. For example, the storage device 22 of each of the plurality of game servers 20[n] stores registration data E indicative of an association with the permission condition C[n] for the game G[n] and the identification information Oid[n] of the special object Ob[n]. The controller 21 refers to the registration data E to specify a special object Ob[n] corresponding to a satisfied permission condition C[n]. The controller 21 transmits notification data X[n] including identification information Oid[n] of the special object Ob[n] from the communication device 23 to the control system 10. The controller 11 of the control system 10 adds the identification information Oid[n] included in the notification data X[n] to the candidate data Za for the user U. As will be understood from the above description, it is not always necessary for the control system 10 to recognize the permission condition C[n] satisfied in the game G[n].

(6) In each of the foregoing embodiments, a configuration is described in which the game server 20[n] transmits the notification data X[n] to the control system 10 in response to the permission condition C[n] being satisfied; however, a point of time at which the notification data X[n] is transmitted to the control system 10 is not limited to the above example. For example, the control system 10 may transmit an information request to each of the plurality of game servers 20[n] at predetermined time intervals. The game server 20[n] having received the information request transmits notification data X[n], which indicates that one or more permission conditions C[n] are satisfied after receipt of a previous information request, to the control system 10. In other words, each time the information request transmitted from the control system 10 is received, each of the plurality of game servers 20[n] transmits the notification data X[n] to the control system 10.

In a state in which the permission condition C[n] is not frequently satisfied, if the control system 10 transmits the information request to each of the plurality of game servers 20[n], the permission condition C[n] is not likely to be satisfied after receipt of the previous information request. Thus, a state in which the notification data X[n] is not transmitted in response to the information request transmitted from the control system 10 occurs at a higher frequency. In other words, an amount of communication of information requests transmitted from the control system 10 to each of the plurality of game servers 20[n] may be large, and may be more than necessary. In view of the circumstances described above, in a state in which the permission condition C[n] is not frequently satisfied, it is preferable that each of the plurality of game servers 20[n] transmit the notification data X[n] to the control system 10 in response to the permission condition C[n] being satisfied, as described in each of the foregoing embodiments. On the other hand, in a state in which the permission condition C[n] is frequently satisfied, a configuration is preferable in which, each time the information request transmitted from the control system 10 is received, each of the plurality of game servers 20[n] transmits the notification data X[n].

Each of the foregoing embodiments in which the notification data X[n] is transmitted to the control system 10 immediately after the permission condition C[n] is satisfied, and the configuration according to this modification in which the notification data X[n] is transmitted in response to receipt of the information request transmitted from the control system 10 are comprehensively described as a configuration in which the notification data X[n] is transmitted to the control system 10 when the permission condition C[n] is satisfied.

(7) In each of the foregoing embodiments, the identification information Uid of the user U is shared with the interactive service and the game service; however, identification information used in the interactive service provided by the control system 10 may differ from identification information used in the game service provided by each of the plurality of game servers 20[n].
(8) In each of the foregoing embodiments, the candidate object Oc is described that causes the appearance of the avatar Av to be changed; however, the candidate object Oc is not limited to the element that causes the appearance of the avatar Av to be changed. For example, a configuration is assumed in which movement of the avatar Av is changed when the candidate object Oc is applied. For example, movement data indicative of a physical movement of the avatar Av (for example, a habit, etc.) may be applied, as a candidate object Oc, to the avatar Av. A change in the candidate object Oc causes a change in movement of the avatar Av. Alternatively, voice data indicative of voice of the avatar Av may be applied, as a candidate object Oc, to the avatar Av, for example. A change in the candidate object Oc causes a change in voice of, or spoken content of, the avatar Av. As will be understood from the above description, the candidate object Oc is comprehensively described as an element that is applied to the avatar Av to cause the avatar Av to be changed.
(9) In each of the foregoing embodiments, a configuration is described in which the control system 10 is separate from the plurality of game servers 20[n]; however, the control system 10 may have functions of one or more game servers 20[n]. A single apparatus may implement functions of two or more game servers 20[n].
(10) The functions of the control system 10 according to each of the foregoing embodiments are implemented by cooperation of one or more processors (controller 11) and the program. The functions of the game server 20[n] according to each of the foregoing embodiments are implemented by cooperation of one or more processors (controller 21) and the program.

Each program described above may be provided in a form stored in a computer-readable recording medium and may be installed in a computer. The recording medium may be a non-transitory recording medium, and an example of the non-transitory recording medium is an optical recording medium (an optical disk) such as a compact disk read-only memory (CD-ROM), and the non-transitory recording medium may also include a recording medium of any known kind, such as a semiconductor recording medium or a magnetic recording medium. The non-transitory recording medium, which includes any recording medium except for a transitory recording medium, propagating signal, does not exclude a volatile recording medium. The non-transitory recording medium may be a storage apparatus in a distribution apparatus that stores a computer program for distribution via a communication network.

### Supplemental Notes

For example, this disclosure is understood as follows based on the above descriptions. In the following descriptions, reference signs in the drawings are denoted in parentheses for convenience in order to facilitate understanding of each aspect, but this disclosure is not limited to the aspects illustrated in the drawings.

### Supplemental Note 1

A control system (10) according to one aspect (supplemental note 1) of this disclosure includes: a first information acquirer (112) configured to acquire first information (X[n1]) from a first system (20[n1]) in a state in which a first condition (C[nl]) is satisfied in use of a first information service by a user (U), the first system (20[n1]) being configured to provide the first information service; a second information acquirer (112) configured to acquire second information (X[n2]) from a second system (20[n2]) in a state in which a second condition (C[n2]) is satisfied in use of a second information service by the user (U), the second system (20 [n2]) being configured to provide the second information service, the second information service being different from the first information service; and an avatar processor (113) configured to apply one or more objects (Oc) among a plurality of objects (Oc) to an avatar (Av) representing the user (U) in an interactive service, the plurality of objects (Oc) including a first object (Ob[nl]) corresponding to the first information (X[n1]), and a second object (Ob[n2]) corresponding to the second information (X[n2]).

According to the aspect described above, the first information (X[n1]) is acquired when the first condition (C[nl]) is satisfied in the first information service, and the second information (X[n2]) is acquired when the second condition (C[n2]) is satisfied in the second information service. Then, the one or more objects (Oc) among the plurality of objects (Oc) including the first object (Ob[nl]) corresponding to the first information (X[n1]) and the second object (Ob[n2]) corresponding to the second information (X[n2]), are applied to the avatar (Av) of the user (U). In other words, a history state of use of different diverse information services by the user (U) is reflected in the avatar (Av) of the user (U). Thus, other users (U) of the interactive service can infer one or more information services, which were used by the user (U) among the different diverse information services, from the avatar (Av) of the user (U). When the first condition (C[nl]) is satisfied in use of the first information service, the first object (Ob[nl]) corresponding to the first information (X[n1]) becomes applicable to the avatar (Av). Thus, it is possible to encourage the user (U) to use the first information service. Similarly, it is possible to encourage the user (U) to use the second information service.

The "information service (first information service/second information service)" is a freely selected service provided via a communication network such as the Internet, for example. The "information service" is, for example, a game service in which a game (G[n]) is provided to the user (U), a social networking service (SNS) in which the user (U) posts information and interacts with other users (U), an electronic commerce service in which the user (U) purchases a variety of types of products, a delivery service in which the user (U) watches and listens to a variety of types of digital content such as video, music, etc., an information retrieval service in which the user (U) can search desired information, or an interactive service in which a plurality of users (U) interact with each other, etc.

The first information service and the second information service are of the same type or of different types. For example, the first information service and the second information service are of the same type of game service, and the first information service provides a game (G[n]) having a title that is different from a title of a game (G[n]) provided by the second information service. In a configuration in which the first information service is a game service and the second information service is an SNS, the first information service and the second information service are of different types. The information service (first information service/second information service) may be a combination of a plurality of different types of information services. It is not necessary to strictly distinguish whether the information services are of the same type or of different types. A provider of the first information service may differ from a provider of the second information service.

The "condition (first condition (C[n1])/second condition (C[n2]))" in an information service is a condition that can be satisfied in use of the information service by the user (U). Specifically, the "condition (first condition (C[n1])/second condition (C[n2]))" is, for example, a condition that can be satisfied during use of the information service by the user (U). For example, when a game service is assumed, the "condition" is, for example, a condition in which an ability score of a character operated by the user (U) should be a predetermined value, a condition in which a predetermined event in the game should be cleared, a condition in which the user U should acquire a predetermined performance in a competition event (e-sports) of a competitive game, etc. For example, when an SNS is assumed, the "condition" is, for example, a condition in which the number of times that the user (U) posts information should reach a predetermined value, a condition in which the number of times that information posted by the user (U) is evaluated affirmatively (the so-called number of "good") should reach a predetermined value, or a condition in which the number of followers of the user (U) should reach a predetermined value, etc.

The first information (X[n1]) is information transmitted from the first system (20[n1]) when the first condition (C[n1]) is satisfied in use of the first information service. For example, the first information (X[n1]) is information indicating that the first condition (C[n1]) is satisfied in use of first information service, or information specifying an object (Ob[n1]) that can be acquired by the user (U) when the first condition (C[n1]) is satisfied. A point of time at which the first information (X[n1]) is transmitted from the first system (20[n1]) is freely selected. For example, the first information (X[n1]) may be transmitted from the first system (20[n1]) immediately after the first condition (C[n1]) is satisfied, or the first information (X[n1]) may be transmitted from the first system (20[n1]) in response to a request provided from the control system (10) after the first condition (C[n1]) is satisfied. Similarly, the second information (X[n2]) is information transmitted from the second system (20 [n2]) when the second condition (C[n2]) is satisfied in use of the second information service. For example, the second information (X[n2]) is information indicating that the second condition (C[n2]) is satisfied in use of the second information service, or information specifying an object (Ob[n2]) that can be acquired by the user (U) when the second condition (C[n2]) is satisfied. A point of time at which the second information (X[n2]) is transmitted from the second system (20[n2]) is freely selected.

The "interactive service" is an information service in which a plurality of users (U) can interact with each other. For example, a variety of types of information services such as a profile service in which each of the plurality of users (U) can refer to a profile of a desired user (U), a chat service in which each of the plurality of users (U) exchanges messages with each other, a virtual social service in which avatars (Av) of the plurality of users (U) interact with each other in a virtual space, etc., is included in a concept of the "interactive service."

The "avatar (Av)" is an object (for example, a character) representing the user (U) in the interactive service. For example, not only a living object such as a human being, an animal, etc., but also an inanimate object such as a robot may be used as the "avatar (Av)." The avatar (Av) is used in the interactive service. For example, in the profile service, an image of the avatar (Av) is used in a screen representing a profile of each of the plurality of users (U). In the chat service, the image of the avatar (Av) of each of the plurality of users (U) that posts messages is used. In the virtual social service, the avatar (Av) is disposed in the virtual space, and the avatar (Av) is operated depending on instructions from the user (U) to interact with an avatar (Av) of another user (U).

The "object (Oc) (first object (Ob[n1])/second object (Ob[n2])" is an element that causes a change in the avatar (Av) of the user (U) when the element is applied to the avatar (Av). Specifically, the object (Oc) is, for example, an element that causes a change in appearance or movement of the avatar (Av). Specifically, an object (Oc) for appearance of the avatar (Av) is, for example, an item that is wearable by the avatar (Av) (hereinafter referred to as "a wearable item") or an element constituting a body of the avatar (Av) (hereinafter referred to as "a body element"). The wearable item is, for example, clothing, an accessory, or a personal ornament (for example, eyeglasses). The body element is, for example, an element related to physical characteristics such as hairstyle, hair color, face, skin color, contour, etc. An object (Oc) for movement of the avatar (Av) is, for example, an object (Oc) representing movement (for example, a habit) of a part of the body of the avatar (Av).

The "plurality of objects (Oc)" may consist only of objects (Ob[n]) resulting from specific conditions being satisfied in the information service, or the "plurality of objects (Oc)" may include an initial or stationary object (Oa) prepared independently of a condition being satisfied in the information service.

The "application" of the object (Oc) to the avatar (Av) means that the appearance or movement of the avatar (Av) is changed depending on a type of the object (Oc) compared to that of the avatar (Av) prior to the application. For example, application of an item that is to be worn means that an appearance of the avatar (Av) is changed to an appearance of the avatar (Av) wearing the item that is to be worn. Application of the body element means that an appearance of a part of the avatar (Av) corresponding to the body element is changed to an appearance of the body element. Application of the object (Oc) for movement of the avatar (Av) means that a corresponding movement is performed by the avatar (Av).

In a specific example (supplemental note 2) of the supplemental note 1, the first information service is a game service in which a first game (G[n1]) is provided to the user (U), and the second information service is a game service in which a second game (G[n2]) is provided to the user (U), the second game (G[n]) having a title that is different from the title of the first game (G[n1]). According to the aspect described above, the avatar (Av), to which one or more objects (Oc) corresponding to a game played by the user (U) in the past are applied, is used in the interactive service. Thus, other users (U) of the interactive service can infer the game G[n], which was played by the user (U), from the appearance of the avatar (Av) of the user (U).

The "game service" is an information service in which a game (G[n]) is provided to the user (U). Specifically, "the game service" is, for example, an information service in which game data (DG[n]) dependent on past playing by the user (U) is provided to a terminal apparatus (30) of the user (U), or is a cloud game service in which a cloud server controls progress of the game.

In a specific example (supplemental note 3) of the supplemental note 1 or the supplemental note 2, the avatar processor (113) is configured to be allowed to apply the first object (Ob[n1]) and the second object (Ob[n2]) in parallel to the avatar (Av). According to the aspect described above, the first object (Ob[n1]) corresponding to the first condition (C[n1]) in the first information service and the second object (Ob[n2]) corresponding to the second condition (C[n2]) in the second information service may be applied in parallel to the avatar (Av). Thus, a state in which the user (U) has used both the first information service and the second information service can be inferred from the avatar (Av) to which the first object (Ob[n1]) and the second object (Ob[n2]) are applied.

"Application in parallel" of the first object (Ob[n1]) and the second object (Ob[n2]) means that a period during which the first object (Ob[n1]) is applied to the avatar (Av) and a period during which the second object (Ob[n2]) is applied to the avatar (Av) overlap in time. For example, a state in which both the first object (Ob[n1]) and the second object (Ob[n2]) are applied to the avatar (Av) is included in "application in parallel."

The control system (10) according to a specific example (supplemental note 4) that is any one of the supplemental notes 1 to 3 includes a third information (X[n3]) acquirer (112) configured to acquire third information (X[n3]) from a third system (20[n3]) in a state in which a third condition (C[n3]) is satisfied in use of a third information service by the user (U), the third system (20[n3]) being configured to provide the third information service, and the plurality of objects (Oc) includes a third object (Ob[n3]) corresponding to a combination of the first information (X[n1]) and the third information (X[n3]). In the aspect described above, the third object (Ob[n3]) corresponding to a combination of the first condition (C[n1]) being satisfied in the first information service and the third condition (C[n3]) being satisfied in the third information service is included in application candidates for the avatar (Av). In other words, the user (U) needs to use both the first information service and the third information service so as to acquire the third object (Ob[n3]). Thus, it is possible to encourage use of the first information service and of the third information service.

The control system (10) according to a specific example (supplemental note 5) that is any one of the supplemental notes 1 to 3 includes a third information (X[n3]) acquirer (112) configured to acquire third information (X[n3]) from a third system (20[n3]) in a state in which a third condition (C[n3]) is satisfied in use of a third information service by the user (U), the third system (20[n3]) being configured to provide the third information service, and the plurality of objects (Oc) includes a third object (Oc-A), and the avatar processor (113) is configured to change the third object (Oc-A) depending on the third information (X[n3]), and to apply a third object after change (Oc-B) to the avatar (Av). In the aspect described above, the third object (Oc-A) is changed depending on the third information (X[n3]) acquired when the third condition (C[n3]) is satisfied in the third information service. Thus, it is possible to encourage use of the third information service, and it is possible to diversify the appearance of the avatar Av.

An information system (100) according to one aspect of this disclosure includes: a first system (20[n1]) configured to provide a first information service; a second system (20[n2]) configured to provide a second information service that differs from the first information service; and a control system (10) configured to provide an interactive service, in which: the first system (20[n1]) is configured to transmit first information (X[n1]) to the control system (10) in a state in which a first condition (C[n1]) is satisfied in use of the first information service by a user (U), the second system (20[n2]) is configured to transmit second information (X[n2]) to the control system (10) in a state in which a second condition (C[n2]) is satisfied in use of the second information service by the user (U), the control system (10) includes: a first information acquirer (112) configured to acquire the first information (X[n1]) from the first system (20[n1]); a second information acquirer (112) configured to acquire the second information (X[n2]) from the second system (20[n2]); and an avatar processor (113) configured to apply one or more objects (Oc) among a plurality of objects (Oc) to an avatar (Av) representing the user (U) in the interactive service, the plurality of objects (Oc) including a first object (Ob[n1]) corresponding to the first information (X[n1]) and a second object (Ob[n2]) corresponding to the second information (X[n2]).

In a specific example (supplemental note 7) of the supplemental note 6, the first system (20[n1]) is configured to determine whether the first condition (C[n1]) is satisfied, and to transmit the first information (X[n1]) in response to determining that the first condition (C[n1]) is satisfied, and the second system (20[n2]) is configured to determine whether the second condition (C[n2]) is satisfied, and to transmit the second information (X[n2]) in response to determining that the second condition (C[n2]) is satisfied. In the aspect described above, the first system (20[n1]) determines whether the first condition (C[n1]) is satisfied, and the second system (20[n2]) determines whether the second condition (C[n2]) is satisfied. Thus, compared to a configuration in which the control system (10) determines whether the first condition (C[n1]) is satisfied and determines whether the second condition (C[n2]) is satisfied, it is possible to reduce amount of communication between the control system (10) and either the first system (20[n1]) or the second system (20[n2]).

In a specific example (supplemental note 8) of the supplemental note 6 or the supplemental note 7, the control system (10) includes an authentication processor (111) configured to execute authentication processing for the user (U), and the first information service or the second information service is provided to the user (U) on condition that the authentication processing is successful. According to the aspect described above, the first information service and the second information service are provided to the user (U) on condition that the authentication processing executed by the control system (10) is successful. Thus, compared to a configuration in which individual authentication processing is required for each of the first information service and the second information service, the user (U) can use the first information service and the second information service through a convenient procedure.

A method for operating a control system (10) according to one aspect (supplemental note 9) of this disclosure includes: acquiring first information (X[n1]) from a first system (20[n1]) in a state in which a first condition (C[n1]) is satisfied in use of a first information service by a user (U), the first system (20[n1]) being configured to provide the first information service; acquiring second information (X[n2]) from a second system (20[n2]) in a state in which a second condition (C[n2]) is satisfied in use of a second information service by the user (U), the second system (20[n2]) being configured to provide the second information service, the second information service being different from the first information service; and applying one or more objects (Oc) among a plurality of objects (Oc) to an avatar (Av) representing the user (U) in an interactive service, the plurality of objects (Oc) including a first object (Ob[n1]) corresponding to the first information (X[n1]) and a second object (Ob[n2]) corresponding to the second information (X[n2]).

A program according to one aspect (supplemental note 10) of this disclosure causes a computer system to function as: a first information acquirer (112) configured to acquire first information (X[n1]) from a first system (20[n1]) in a state in which a first condition (C[n1]) is satisfied in use of a first information service by a user (U), the first system (20[n1]) being configured to provide the first information service; a second information acquirer (112) configured to acquire second information (X[n2]) from a second system (20[n2]) in a state in which a second condition (C[n2]) is satisfied in use of a second information service by the user (U), the second system (20[n2]) being configured to provide the second information service, the second information service being different from the first information service; and an avatar processor (113) configured to apply one or more objects (Oc) among a plurality of objects (Oc) to an avatar (Av) representing the user (U) in an interactive service, the plurality of objects (Oc) including a first object (Ob[n1]) corresponding to the first information (X[n1]) and a second object (Ob[n2]) corresponding to the second information (X[n2]).

### Description of Reference Signs

100... information system, 10... control system, 11, 21, 31... controller, 12, 22, 32... storage device, 13, 23, 33... communication device, 20[n]... game server, 30... terminal apparatus, 34... operation device, 35... display, 211... information processor, 212... condition determiner, 111... authentication processor, 112... information acquirer, 113... avatar processor, 114... interaction manager.

## Claims

1. A control system comprising:
a first information acquirer configured to acquire first information from a first system in a state in which a first condition is satisfied in use of a first information service by a user, the first system being configured to provide the first information service;
a second information acquirer configured to acquire second information from a second system in a state in which a second condition is satisfied in use of a second information service by the user, the second system being configured to provide the second information service, the second information service being different from the first information service; and
an avatar processor configured to apply one or more objects among a plurality of objects to an avatar representing the user in an interactive service, the plurality of objects including a first object corresponding to the first information and a second object corresponding to the second information.

2. The control system according to claim 1,
wherein the first information service is a game service in which a first game is provided to the user, and
wherein the second information service is a game service in which a second game is provided to the user, the second game having a title that is different from a title of the first game.

3. The control system according to claim 1 or 2, wherein the avatar processor is configured to be allowed to apply the first object and the second object in parallel to the avatar.

4. The control system according to any one of claims 1 to 3, further comprising:
a third information acquirer configured to acquire third information from a third system in a state in which a third condition is satisfied in use of a third information service by the user, the third system being configured to provide the third information service, and
wherein the plurality of objects includes a third object corresponding to a combination of the first information and the third information.

5. The control system according to any one of claims 1 to 3, further comprising:
a third information acquirer configured to acquire third information from a third system in a state in which a third condition is satisfied in use of a third information service by the user, the third system being configured to provide the third information service,
wherein the plurality of objects includes a third object, and
wherein the avatar processor is configured to:
change the third object depending on the third information; and
apply a third object after change to the avatar.

6. An information system comprising:
a first system configured to provide a first information service;
a second system configured to provide a second information service that differs from the first information service; and
a control system configured to provide an interactive service,
wherein the first system is configured to transmit first information to the control system in a state in which a first condition is satisfied in use of the first information service by a user,
wherein the second system is configured to transmit second information to the control system in a state in which a second condition is satisfied in use of the second information service by the user, and
wherein the control system comprises:
a first information acquirer configured to acquire the first information from the first system;
a second information acquirer configured to acquire the second information from the second system; and
an avatar processor configured to apply one or more objects among a plurality of objects to an avatar representing the user in the interactive service, the plurality of objects including a first object corresponding to the first information and a second object corresponding to the second information.

7. The information system according to claim 6,
wherein the first system is configured to:
determine whether the first condition is satisfied, and
transmit the first information in response to determining that the first condition is satisfied, and
wherein the second system is configured to:
determine whether the second condition is satisfied, and
transmit the second information in response to determining that the second condition is satisfied.

8. The information system according to claim 6 or 7,
wherein the control system comprises an authentication processor configured to execute authentication processing for the user, and
wherein the first information service or the second information service is provided to the user on condition that the authentication processing is successful.

9. A method for operating a control system, the method comprising:
acquiring first information from a first system in a state in which a first condition is satisfied in use of a first information service by a user, the first system being configured to provide the first information service;
acquiring second information from a second system in a state in which a second condition is satisfied in use of a second information service by the user, the second system being configured to provide the second information service, the second information service being different from the first information service; and
applying one or more objects among a plurality of objects to an avatar representing the user in an interactive service, the plurality of objects including a first object corresponding to the first information and a second object corresponding to the second information.

10. A program that causes a computer system to function as:
a first information acquirer configured to acquire first information from a first system in a state in which a first condition is satisfied in use of a first information service by a user, the first system being configured to provide the first information service;
a second information acquirer configured to acquire second information from a second system in a state in which a second condition is satisfied in use of a second information service by the user, the second system being configured to provide the second information service, the second information service being different from the first information service; and
an avatar processor configured to apply one or more objects among a plurality of objects to an avatar representing the user in an interactive service, the plurality of objects including a first object corresponding to the first information and a second object corresponding to the second information.
